(19) **Europäisches Patentamt / European Patent Office / Office européen des brevets**

(11) **EP 1 480 374 B1**

(12) **EUROPEAN PATENT SPECIFICATION**

(45) Date of publication and mention
of the grant of the patent:
**28.02.2007 Bulletin 2007/09**

(51) Int Cl.:
*H04L 9/32* (2006.01)   *H04L 9/08* (2006.01)
*H04L 29/06* (2006.01)

(21) Application number: **03253137.8**

(22) Date of filing: **20.05.2003**

(54) **Access authentication**

Zugriffsauthentifizierung

Authentification d'accès

(84) Designated Contracting States:
**AT BE BG CH CY CZ DE DK EE ES FI FR GB GR HU IE IT LI LU MC NL PT RO SE SI SK TR**

(43) Date of publication of application:
**24.11.2004 Bulletin 2004/48**

(73) Proprietor: **TELEFONAKTIEBOLAGET LM ERICSSON (publ)**
**164 83 Stockholm (SE)**

(72) Inventors:
  • **Bjarme, Jens**
    **22394 Svedala (SE)**
  • **Skoog, Michael**
    **21127 Malmö (SE)**
  • **Schalin, Patrik**
    **22241 Lund (SE)**
  • **Smeets, Bernard**
    **24010 Dalby (SE)**

(74) Representative: **Clarke, Alison Clare**
**HASELTINE LAKE**
**Redcliff Quay**
**120 Redcliff Street**
**Bristol BS1 6HU (GB)**

(56) References cited:
    US-A- 5 668 876     US-A1- 2002 023 213
    US-B1- 6 226 383

• **GENG-SHENG KUO ET AL: "New design considerations of secure RPC for future high-speed network-based distributed environment" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA, IEEE, 29 November 1993 (1993-11-29), pages 182-187, XP010109702 ISBN: 0-7803-0917-0**
• **VOLNER R: "Catv security architecture" PROCEEDINGS 36TH ANNUAL 2002 INTERNATIONAL CARNAHAN CONFERENCE ON SECURITY TECHNOLOGY. (ICCST). ATLANTIC CITY, NJ, OCT. 20 - 24, 2002, IEEE INTERNATIONAL CARNAHAN CONFERENCE ON SECURITY TECHNOLOGY, NEW YORK, NY: IEEE, US, vol. CONF. 36, 20 October 2002 (2002-10-20), pages 209-215, XP010616071 ISBN: 0-7803-7436-3**
• **YLONEN T: "- The SSH (Secure Shell) Remote Login Protocol" INTERNET DRAFT, 15 November 1995 (1995-11-15), XP002206993 Retrieved from the Internet: <URL:http://www.watersprings.org/pub/id/dr aft-ylonen-ssh-protocol-00.txt> [retrieved on 2002-07-22]**
• **E. RESCORLA: "RFC 2818 - HTTP over TLS" REQUEST FOR COMMENTS, [Online] May 2000 (2000-05), XP002269217 Retrieved from the Internet: <URL:ftp://ftp.rfc-editor.org/in-notes/pdf rfc/rfc2818.txt.pdf> [retrieved on 2004-02-05]**

EP 1 480 374 B1

## Description

## TECHNICAL FIELD

The present invention relates to a method and system for access authentication. In particular, it relates to protecting networks against unauthorized access and to a method and system to securely authenticate network access credentials for clients (or users).

## BACKGROUND OF THE INVENTION

In a networked system with authentication, it is typical for multiple computer systems, for example, to be connected together through a communications link, which comprises the network. The network system also provides a degree of security which establishes the services provided by the network that can be accessed by a program or user. Typically, a user is required to "logon" to the network for the system to allow access to the network services it provides. The logon mechanism typically requires the user to enter identification information such as a username and a password or other identification information, hereinafter referred to as credentials. An authentication procedure for validating the entered credentials against known information is carried out to verify that the user is permitted to access the network services. The validation process may involve directly comparing the information or comparing information using well-known encryption and decryption techniques. For example, the network system may store passwords for each user that is allowed to access the network. For example, during the authentication procedure, the entered password for that username or other credentials may be compared with the previously stored password information by using the entered password to encrypt a randomly agreed number. When a match occurs, the user is permitted access to the network services requested. Typically, a separate logon mechanism is required by each network and by the computer system (the local node) to gain access to the local services when a secure local environment is maintained.

Increasingly, users can communicate with a networked computer system over a public communication network or over a wireless communication link. Such communication links, however, are not secure and the transmission of credentials may be easily intercepted and interpreted by a third party, particularly, if the credentials have not been encrypted before it is sent over the communication link.

Furthermore, it may be necessary to repeat the authentication procedure and, therefore, users already logged onto the network are prompted to reenter their credentials for reverification.

In addition to authentication, public key exchange is an important part of communication across a network. Once a user has been authenticated, a secure communication channel must be set up between the user and the network services. This is generally accomplished by the user and a network driver or service provider exchanging a public key, called a session key, for use during communication subsequent to authentication.

Authentication over a network, especially a public network like the Internet or a wireless communication link, is difficult because the communication environment between the client and server is not secure. One known solution is exchanging sessions keys based on the Diffie-Hellman key exchange protocol. By way of background and to understand the terminology used hereinafter, the basic principles of the Diffie-Hellman key exchange protocol will be explained.

For a one-way function $f(x)$ such as modular exponentiation, it is computationally infeasible to find the value of $x$ from the function value $y$, where $f(x) = y$. Let $p$ be a large prime number and $g$ a generator of the multiplicative group mod $p$ (that is, the numbers in the range $1,..., p-1$). Then $f(x) = g^x \bmod p$ is generally assumed to be a one-way function. The inverse function, called the discrete log function, is difficult to compute. Thus, use of the function $g^x \bmod p$ as a session key makes it difficult to compute its inverse and therefore, a third party would have difficulty interpreting the session key.

The Diffie-Hellman key exchange protocol as described, for example, in W. Diffie and M. Hellman, New Directions in Cryptography, IEEE Transactions on Information Theory, vol. 22, no. 6, 644-654, 1976, makes use of this function to generate sessions keys between two parties (say A and B) which wish to communicate with each other.

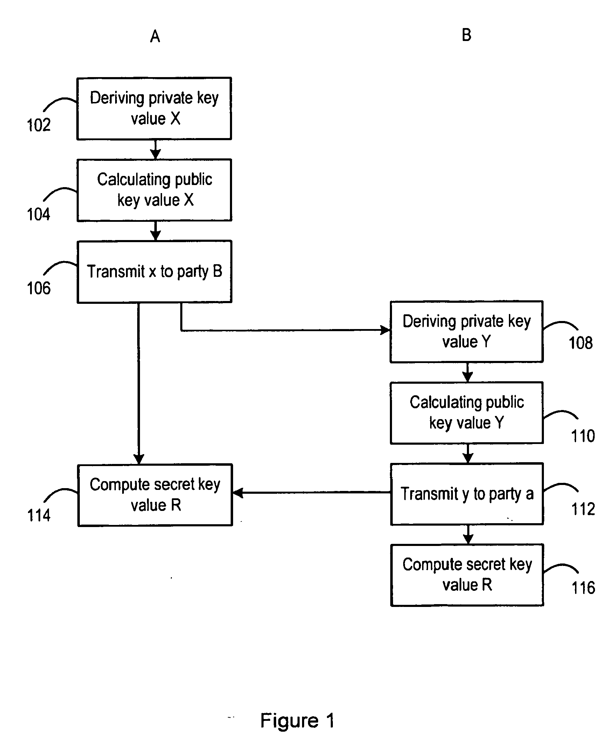

The principles of the Diffie-Hellman key exchange protocol are illustrated in Fig. 1. The first party A in step 102 chooses a random integer x from a group Zq where Zq = {0,1,...,q-1}. This is known as party A's private key value. In step 104 A computes $X = g^x \bmod p$, where $p$ is a prime number and $g$ is a generator. $X$ is known as party A's public key value. In step 106, A transmits its public key value $X$ to party B. In step 108 party B chooses a random integer $y$ from the group Zq (party B's private key value). In step 110 B computes its public key value, $Y = g^y \bmod p$ and transmits $Y$ to party A in 112. Finally, party A computes $g^{xy} = (g^y)^x \bmod p$ and party B computes $g^{yx} = (g^x)^y \bmod p$, steps 114, 116. Since $g^{xy} = g^{yx} = k$, Parties A and B now have a shared secret key $k$.

Beside the DH solution the problem of secure access to services has been the issue of the Kerberos and DSSA/SPX protocols. These protocols are designed to meet many security requirements in networked computer systems. Their deployment is however demanding in both (computer) management efforts and setup costs. The latter as a result of the need to have a secure way to setup the key infrastructure. It would, instead, be desirable to reuse the normally already exisiting standard management of users and their access rights, and avoid the need of a key infrastructure.

Kerberos authentication and authorization system is disclosed for example, in Technical Report, MIT Project Athena, Cambridge, MA, 1987.

For DSSA/SPX see Computer Security by D Gollmann, J Wiley, Nov 2000.

US 6,226,382 discloses a method of authentication of two parties using a small shared secret, the shared secret being kept by each party.

US 2002/0023213 discloses an encryption system in which a locking key for a recipient is retrieved from a local key store. If this cannot be retrieved, the locking key is retrieved from a key server.

Various techniques for verification and authentication of one party in an exchange are disclosed in Menezes A. et al. "Handbook of Applied Cryptography", chapter 10 "Identification and Entity Authentication", CRC Press Series on Discrete Mathematics and its Applications.

## SUMMARY OF THE INVENTION

The object of the present invention is to provide user authentication in a network system for clients (or users) already logged onto the network once without having to reenter credentials more than once and without having to access credentials for the domain. Furthermore, the access authentication that results is not platform dependent.

This is achieved by authenticating a client and granting the client permissions for a service if the client can read a session secret, calculate a session key and successfully have the session key verified by a service provider. The service provider may be provided on a server.

## BRIEF DESCRIPTION OF DRAWINGS

Embodiments of the present invention will now be described with reference to the accompanying drawings in which:

> Figure 1 illustrates the steps of the Diffie-Hellman key exchange protocol;
> Figure 2 illustrates the network system incorporating the access authentication in accordance with an embodiment of the present invention; and
> Figure 3 illustrates a flow chart of the method steps of the access authentication of an embodiment of the present invention.

## DETAILED DESCRIPTION OF PREFERRED EMBODIMENTS

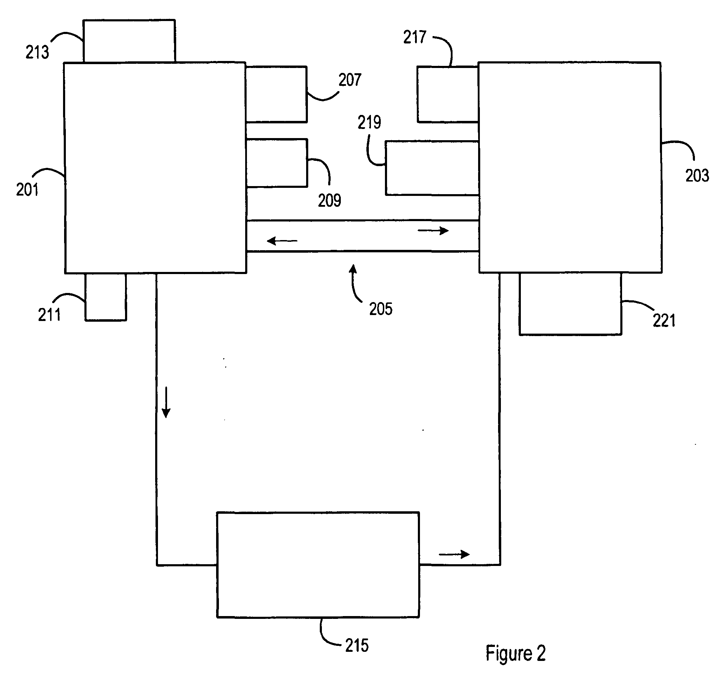

As illustrated in Figure 2, in accordance with an embodiment of the present invention, at least one server or service provider 201 is connected to at least one client (user) 203 via a network system 205 which includes a secure communication link that allows the client to authenicate the service provider and provides message integrity and confidentiality protection. The server 201 comprises calculating means 207, 209, 211 and comparison means 213 and a file storage system 215. The client 203 comprises calculating means 217, 219, 221.

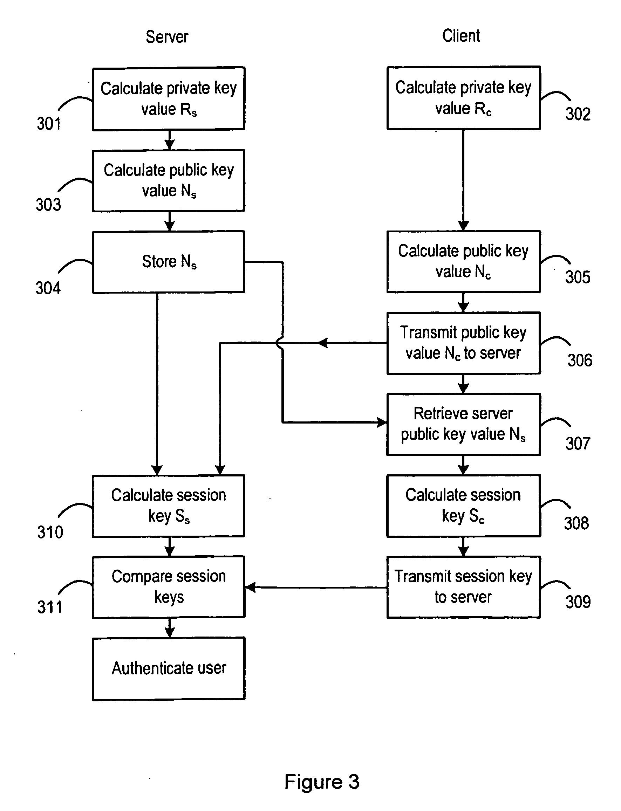

The method steps of an embodiment of the present invention will now be described with reference to Figures 2 and 3. In step 301 of figure 3, the server 201 calculates its private key value $R_s$ in calculating means 207. This may be derived by selecting a random integer from a set of integer values. In step 302, the client 203 calculates its private key value $R_c$ in calculating means 217. Again this may be derived by selecting a random integer from the same set of integer values from which the server's private key value has been selected. In step 303, the server 201 calculates its public key value $N_s$ in calculating means 209. The server's public key value is calculated as follows:

$$N_s = A^{R_s} \bmod p$$

wherein $A$ is a generator; $R_s$ the server's private key value and $p$ is a large prime number.

The server's public key value $N_s$ is then stored in a designated secure area in the file system 215, step 304. The designated secure area may comprise at least one secret folder or folders selected from the existing folders on the network. Preferably, the server has one folder for each authentication group, i.e. for each group of users that have the same permissions. The secret folder may be assigned to any folder on the existing network. Preferably, only the server is given write permissions for the secret folder or folders. A system administrator administrates the secret folder or folders by granting certain users read rights to the folders. Therefore, a user that wants authentication, would need to have at least read rights for a specific secret folder.

In step 305, the client's public key value $N_c$ is calculated by calculating means 219. The client's public key value $N_c$ is calculated as follows :

$$N_c = A^{R_c} \bmod p$$

wherein $A$ is a generator; $R_c$ the client's private key value and $p$ is a large prime number.

In step 306, the client 203 sends the client's public key value $N_c$ to the server 201 over the secured communication link. In step 307, the client 203 retrieves the server's public key value $N_s$ from the file store 215 over the secured communication link providing that the user on the client 203 has the read rights for the secret folder in which the server's public key value is stored.

In step 308, the client 203 calculates its session key $S_c$, in the calculating means 221 as follows:

$$S_c = N_s{}^{R_c} \bmod p$$

In step 309, the client 203 sends its session key $S_c$ to the server 201.

In step 310, the server 201 calculates its session key $S_s$ in the calculating means 211 as follows:

$$S_s = N_c{}^{R_s} \bmod p$$

In step 311, the server's session key and the client's session key are compared by the comparison means 213. If the session keys are verified, the server grant permissions to the client for a specific service on the network.

In this way, Diffie-Hellman is used to make a secure exchange of a public key between a server and a client. The public key is based upon a random number selected by the server and placed in a server chosen folder on an existing network. A new public key is constructed for each new authentication. If the user that asks for authentication can read the public key, calculate a session key from the public key and if the session key is verified by the server, the user is authenticated by the server and can then use the specific services he wants to get access to.

This means that all administration of the users is made using the existing read rights for the users on the network, for example a user requests a service that is guarded by the authentication system of the present invention. The user requests the system administrator to grant read rights to the secret folder on the network. After this is done the server can authenticate the user without further user interaction.

Although a preferred embodiment of the method and system of the present invention has been illustrated in the accompanying drawings and described in the forgoing detailed description, it will be understood that the invention is not limited to the embodiment disclosed, but is capable of numerous variations, modifications without departing from the scope of the invention as set out in the following claims.

**Claims**

1. A method of authenticating a client (203) logged onto a network (205) for a service on the network (205), the method comprising the steps of:

   the client (203) reading (307) a prestored server public key value $N_s$ ;
   the client (203) transmitting (306) a client public key value $N_c$ to a server (201);
   the client (203) calculating (308) a client session secret $S_c$ based on the read server public key value $N_s$ ;
   the server (201) calculating (310) a server session secret $S_s$ based on the transmitted client public key value $N_c$ ; and
   the server (201) authenticating (311) the client (203) and granting permissions to the client (203) for the service upon comparison of the server session secret $S_s$ and the client session secret $S_c$.

2. A method according to claim 1, wherein the method further comprises the step of:

   establishing a secured connection between the client (203) and the server (201), prior to the client (203) reading the prestored server public key value $N_s$.

3. A method according to claim 2, wherein the client session secret $S_c$ is calculated from a server public key value $N_s$ and a client private key value $R_c$ ; and the server session secret $S_s$ is calculated from the client public key value $N_c$ and the server private key value $R_s$.

4. A method according to claim 3, wherein the client private key value $R_c$ and the server private key value $R_s$ are random integers selected from the same set of integer values.

5. A method according to claim 3 or 4, wherein the server public key $N_s$ is calculated as follows:

$$N_S = A^{R_s} \bmod p \cdot$$

   wherein $A$ is a generator, $R_s$ the server private key value and $p$ is a prime number.

6. A method according to any one of claims 3 to 5, wherein the client public key value $N_c$ is calculated as follows:

$$N_c = A^{R_c} \bmod p,$$

   where $A$ is a generator, $R_c$ the client private key value and $p$ is a prime number.

7. A method according to any one of claims 3 to 6, wherein the server session secret $S_s$ is calculated as follows:

$$S_s = N_c^{R_s} \bmod p \, ,$$

wherein $R_s$ the server private key value, $N_c$ is the client public key value and $p$ is a prime number.

8. A method according to any one of claims 3 to 7, wherein the client session secret $S_c$ is calculated as follows:

$$S_c = N_s{}^{R_c} \bmod p \, ,$$

wherein $R_c$ is the client private key value, $N_s$ is the server public key value and $p$ is a prime number.

9. A method according to any one of the preceding claims, wherein the method further comprises the step of:

storing (304) the server public key value in a designated secure area.

10. A method according to claim 9, wherein the method further comprises the steps of:

determining the client's rights; and
allowing the client access to the designated secure area on the basis of the determined rights.

11. A method according to any one of the preceding claims, wherein the method further comprises the step of :

generating a client session secret and a server session secret for each authentication.

12. A system comprising:

at least one server (201);
at least one client (203) in communication with the server (201);
means for authenticating the client (203) for a service, wherein the client (203) comprises means for retrieving a server public key value $N_s$, means for transmitting a client public key value $N_c$ to the server (201), means (221) for calculating a client session secret based on the server public key value $N_s$ and the server (201) comprises means (211) for calculating a server session secret $S_s$ based on the client public key value $N_c$ and means (213) for authenticating the client and granting permissions to the client for a service upon comparison of the server session secret and the client session secret.

**Patentansprüche**

1. Verfahren zum Authentifizieren eines Client (203), der in einem Netz (205) als aktiv angemeldet ist, in Bezug auf einen Dienst im Netz (205), wobei das Verfahren die Schritte umfasst:

durch den Client (203): Lesen (304) eines im Voraus gespeicherten öffentlichen Server-Schlüsselertes N$_S$;
durch den Client (203): Senden (306) eines öffentlichen Client-Schlüsselwertes (N$_C$) an einen Server (201);
durch den Client (203): Berechnen (308) eines Client-Sitzungsgeheimnisses (S$_C$) basierend auf dem gelesenen öffentlichen Server-Schlüsselwert (N$_S$) ;
durch den Server (201) : Berechnen (310) eines Server-Sitzungsgeheimnisses (S$_S$) basierend auf dem gesendeten öffentlichen Client-Schlüsselwert (N$_C$) ; und
durch den Server (201): Authentifizieren (311) des Client (203) und Erteilen einer Zulassung an den Client (203) für den Dienst auf einem Vergleich des Server-Sitzungsgeheimnisses (S$_S$) und des Client-Sitzungsgeheimnisses (S$_C$) hin.

2. Verfahren nach Anspruch 1, wobei das Verfahren ferner den Schritt umfasst:

Einrichten einer gesicherten Verbindung zwischen dem Client (203) und dem Server (201), bevor der Client (203) den im Voraus gespeicherten öffentlichen Server-Schlüsselwert (N$_S$) liest.

3. Verfahren nach Anspruch 2, wobei das Client-Sitzungsgeheimnis (S$_C$) aus einem öffentlichen Server-Schlüsselwert (N$_S$) und einem privaten Client-Schlüsselwert (R$_C$) berechnet wird; und das Server-Sitzungsgeheimnis (S$_S$) aus dem öffentlichen Client-Schlüsselwert (N$_C$) und dem privaten Server-Schlüsselwert (R$_S$) berechnet wird.

4. Verfahren nach Anspruch 3, wobei der private Client-Schlüsselwert (R$_C$) und der private Server-Schlüsselwert (R$_S$) zufällige ganze Zahlen sind, die aus demselben Satz von ganzzahligen Werten ausgewählt werden.

5. Verfahren nach Anspruch 3 oder 4, wobei der öffentliche Server-Schlüssel (N$_S$) folgendermaßen berechnet wird:

$$N_S = A^{R_S} \bmod p \,.$$

wobei A ein Generator ist, $R_S$ ein privater Server-Schlüsselwert und p eine Primzahl.

6. Verfahren nach einem der Ansprüche 3 bis 5, wobei der öffentliche Client-Schlüsselwert ($N_C$) folgendermaßen berechnet wird:

$$N_c = A^{R_c} \bmod p \,,$$

wobei A ein Generator ist, $R_C$ der private Client-Schlüsselwert und p eine Primzahl.

7. Verfahren nach einem der Ansprüche 3 bis 6, wobei das Server-Sitzungsgeheimnis ($S_S$) folgendermaßen berechnet wird:

$$S_s = N_c^{R_S} \bmod p \,,$$

wobei $R_S$ der private Server-Schlüsselwert ist, $N_C$ der öffentliche Client-Schlüsselwert und p eine Primzahl.

8. Verfahren nach einem der Ansprüche 3 bis 7, wobei das Client-Schlüsselgeheimnis ($S_C$) folgendermaßen berechnet wird:

$$S_c = N_s^{R_c} \bmod p \,,$$

wobei $R_C$ der private Client-Schlüsselwert ist, $N_S$ der öffentliche Server-Schlüsselwert und p eine Primzahl.

9. Verfahren nach einem der vorhergehenden Ansprüche, wobei das Verfahren ferner den Schritt umfasst:

Speichern (304) des öffentlichen Server-Schlüsselwerts in einem designierten sicheren Bereich.

10. Verfahren nach Anspruch 9, wobei das Verfahren ferner die Schritte umfasst:

Bestimmen der Rechte des Client; und Zulassen des Client-Zugriffs auf den designierten sicheren Bereich basierend auf den bestimmen Rechten.

11. Verfahren nach einem der vorhergehenden Ansprüche, wobei das Verfahren ferner den Schritt umfasst:

Erzeugen eines Client-Sitzungsgeheimnisses und eines Server-Sitzungsgeheimnisses für jede Authentifizierung.

12. System, umfassend:

mindestens einen Server (201); mindestens einen Client (203) in Kommunikation mit dem Server (201); eine Einrichtung zum Authentifizieren des Client (203) für einen Dienst, wobei der Client (203) eine Einrichtung umfasst zum Einholen eines öffentlichen Server-Schlüsselwertes ($N_S$), eine Einrichtung zum Senden eines öffentlichen Client-Schlüsselwertes ($N_C$) zu dem Server (201), eine Einrichtung (221) zum Berechnen eines Client-Sitzungsgeheimnisses basierend auf dem öffentlichen Server-Schlüsselwert ($N_S$), und der Server (201) eine Einrichtung (211) umfasst zum Berechnen eines Server-Sitzungsgeheimnisses ($S_S$) basierend auf dem öffentlichen Client-Schlüsselwert ($N_C$) und eine Einrichtung (213) zum Authentifizieren des Client und zum Erteilen der Zulassung für den Client in Bezug auf einen Dienst auf das Vergleichen des Server-Sitzungsgeheimnisses und des Client-Sitzungsgeheimnisses hin.

**Revendications**

1. Procédé d'authentification d'un client (203) ayant ouvert une session sur un réseau (205) pour obtenir un service sur le réseau (205), le procédé comprenant les étapes consistant à :

faire lire (307) par le client (203) une valeur de clef publique du serveur $N_S$ stockée au préalable ; faire émettre (306) par le client (203) une valeur de clef publique du client $N_C$ vers un serveur (201) ; faire calculer (308) par le client (203) une clef secrète de session du client $S_C$ fondée sur la valeur de clef publique du serveur $N_S$ qui a été lue ; faire calculer (310) par le serveur (201) une clef secrète de session du serveur $S_S$ fondée sur la valeur de clef publique du client $N_C$ qui a été émise ; et faire authentifier (311) le client (203) par le serveur (201) et accorder des permissions au client (203) pour le service, après comparaison de la clef secrète de session du serveur $S_S$ et de la clef secrète de session du client $S_C$.

**2.** Procédé selon la revendication 1, dans lequel le procédé comprend en outre l'étape consistant à :

> établir une connexion sécurisée entre le client (203) et le serveur (201), avant que le client (203) ne lise la valeur de clef publique du serveur $N_S$ stockée au préalable.

**3.** Procédé selon la revendication 2, dans lequel la clef secrète de session du client $S_C$ est calculée à partir d'une valeur de clef publique du serveur $N_S$ et d'une valeur de clef privée du client $R_C$ ; et la clef secrète de session du serveur $S_S$ est calculée à partir de la valeur de clef publique du client $N_C$ et de la valeur de clef privée du serveur $R_S$.

**4.** Procédé selon la revendication 3, dans lequel la valeur de clef privée du client $R_C$ et la valeur de clef privée du serveur $R_S$ sont des entiers aléatoires sélectionnés dans le même ensemble de valeurs entières.

**5.** Procédé selon la revendication 3 ou 4, dans lequel la clef publique du serveur $N_S$ est calculée de la manière suivante :

$$N_S = A^{Rs} \bmod p$$

où A est un générateur, $R_S$ la valeur de clef privée du serveur et p est un nombre premier.

**6.** Procédé selon l'une quelconque des revendications 3 à 5, dans lequel la valeur de clef publique du client $N_C$ est calculée de la manière suivante :

$$N_C = A^{Rc} \bmod p$$

où A est un générateur, $R_C$ la valeur de clef privée du client et p est un nombre premier.

**7.** Procédé selon l'une quelconque des revendications 3 à 6, dans lequel la clef secrète de session du serveur $S_S$ est calculée de la manière suivante :

$$S_S = N_C^{Rs} \bmod p$$

où $R_S$ est la valeur de clef privée du serveur, $N_C$ est la valeur de clef publique du client et p est un nombre premier.

**8.** Procédé selon l'une quelconque des revendications 3 à 7, dans lequel la clef secrète de session du client $S_C$ est calculée de la manière suivante :

$$S_C = N_S^{Rc} \bmod p$$

où $R_C$ est la valeur de clef privée du client, $N_S$ est la valeur de clef publique du serveur et p est un nombre premier.

**9.** Procédé selon l'une quelconque des revendications précédentes, dans lequel le procédé comprend en outre l'étape consistant à :

> stocker (304) la valeur de clef publique du serveur dans une zone sécurisée désignée.

**10.** Procédé selon la revendication 9, dans lequel le procédé comprend en outre les étapes consistant à :

> déterminer les droits du client ; et
> accorder au client un accès à la zone sécurisée désignée sur la base des droits déterminés.

**11.** Procédé selon l'une quelconque des revendications précédentes, dans lequel le procédé comprend en outre l'étape consistant à :

> produire une clef secrète de session du client et une clef secrète de session du serveur pour chaque authentification.

**12.** Système comprenant :

> au moins un serveur (201) ;
> au moins un client (203) en communication avec le serveur (201) ;
> un moyen destiné à authentifier le client (203) pour un service, dans lequel le client (203) comprend un moyen destiné à obtenir une valeur de clef publique du serveur $N_S$, un moyen destiné à transmettre au serveur (201) une valeur de clef publique du client $N_C$, un moyen (221) destiné à calculer une clef secrète de session du client sur la base de la valeur de clef publique du serveur $N_S$ et le serveur (201) comprend un moyen (211) destiné à calculer une clef secrète de session du serveur $S_S$ sur la base de la valeur de clef publique du client $N_C$ et un moyen (213) destiné à authentifier le client et à accorder des permissions au client pour un service, après comparaison de la clef secrète de session du serveur et de la clef secrète de session du client.

A                                                                                        B

```
102 ┌─────────────────┐
    │ Deriving private key │
    │ value X           │
    └─────────────────┘
             │
             ▼
104 ┌─────────────────┐
    │ Calculating public │
    │ key value X       │
    └─────────────────┘
             │
             ▼
106 ┌─────────────────┐
    │ Transmit x to party B │
    └─────────────────┘
```

Deriving private key value X — 102

Calculating public key value X — 104

Transmit x to party B — 106

Deriving private key value Y — 108

Calculating public key value Y — 110

Transmit y to party a — 112

Compute secret key value R — 114

Compute secret key value R — 116

Figure 1

Figure 2

Server                                    Client

```
       ┌─────────────────────┐          ┌─────────────────────┐
       │ Calculate private key│          │ Calculate private key│
  301  │      value R_s       │          │      value R_c       │  302
       └─────────────────────┘          └─────────────────────┘
                 │                                  │
                 ▼                                  │
       ┌─────────────────────┐                     │
       │ Calculate public key │                     │
  303  │      value N_s       │                     │
       └─────────────────────┘                     │
                 │                                  ▼
                 ▼                       ┌─────────────────────┐
       ┌─────────────────────┐          │ Calculate public key │
       │      Store N_s       │────┐     │      value N_c       │  305
  304  └─────────────────────┘    │     └─────────────────────┘
                 │                 │                │
                 │            ┌────┼─────◄──────────┤
                 │            │    │     ┌─────────────────────┐
                 │            │    │     │ Transmit public key  │
                 │            │    └─◄───│  value N_c to server │  306
                 │            │          └─────────────────────┘
                 │            └──────────►┌─────────────────────┐
                 │                        │  Retrieve server     │
                 │                        │ public key value N_s │  307
                 │                        └─────────────────────┘
                 ▼                                  │
       ┌─────────────────────┐                     ▼
       │ Calculate session    │          ┌─────────────────────┐
       │      key S_s         │          │ Calculate session    │
  310  └─────────────────────┘          │      key S_c         │  308
                 │                        └─────────────────────┘
                 ▼                                  │
       ┌─────────────────────┐                     ▼
       │  Compare session     │◄─────    ┌─────────────────────┐
       │      keys            │          │ Transmit session key │
  311  └─────────────────────┘          │      to server       │  309
                 │                        └─────────────────────┘
                 ▼
       ┌─────────────────────┐
       │  Authenticate user   │
       └─────────────────────┘
```

Figure 3